# EUROPÄISCHE PATENTSCHRIFT

(11) **EP 2 898 667 B1**
(45) Veröffentlichungstag und Bekanntmachung des Hinweises auf die Patenterteilung: **15.05.2019**
(21) Anmeldenummer: 13766923.0
(22) Anmeldetag: 16.09.2013
(51) Int. Cl.: H04N 5/232

(54) **MOBILE EMPFANGSEINHEIT, VERFAHREN ZUR BEDIENUNG DER MOBILEN EMPFANGSEINHEIT SOWIE COMPUTERPROGRAMM**
MOBILE RECEIVER UNIT, METHOD FOR OPERATING THE MOBILE RECEIVER UNIT AND COMPUTER PROGRAM
RÉCEPTEUR MOBILE, PROCÉDÉ DE COMMANDE D'UN RÉCEPTEUR MOBILE AINSI QUE PROGRAMME D'ORDINATEUR

(30) Priorität: 24.09.2012 DE 102012217146
(43) Veröffentlichungstag der Anmeldung: 29.07.2015
(73) Patentinhaber: Robert Bosch GmbH, 70442 Stuttgart (DE)
(72) Erfinder: YANNI, Michael, Lancaster, PA 17601 (US); HEIGL, Stephan, 30173 Hannover (DE); GOTTSCHLAG, Daniel, 90419 Nuernberg (DE)
(86) Internationale Anmeldenummer: PCT/EP2013/069150
(87) Internationale Veröffentlichungsnummer: WO 2014/044636

(56) Entgegenhaltungen:
- EP-A1- 1 773 045
- DE-A1-102006 033 147
- DE-A1-102010 006 982
- US-A1- 2012 038 549
- US-A1- 2012 127 319

## Beschreibung

### Stand der Technik

Die Erfindung betrifft eine mobile Empfangseinheit zur Steuerung einer Aktorik zur Einstellung eines Schwenk winkels einer Kamera, mit einer Anzeigeeinrichtung zur Anzeige eines durch die Kamera erfassten Bildes, mit einer Steuereinrichtung zur Bestimmung von Steuerbefehlen für die Aktorik, mit einer Sendeeinheit zur Übertragung der Steuerbefehle an die Aktorik. Die Erfindung betrifft auch ein Verfahren zur Bedienung der mobilen Empfangseinheit sowie ein Computerprogramm.

Pan/Tilt-Kameras werden zur Überwachung von öffentlichen oder privaten Gebäuden oder Plätzen, Straßen, Bahnhöfen, Fabrikhallen etc. eingesetzt. Solche Kameras sind schwenk- und neigeverstellbar und können somit auf den gewünschten Überwachungsbereich gerichtet werden. Die Steuerung der Pan/Tilt-Kamera erfolgt z. B. mittels eines Joysticks. Die von der Pan/Tilt-Kamera erfassten Bilddaten werden zur Sichtung auf einen Bildschirm übertragen.

Die KR 207 012 49 06 A, die wohl den nächstkommenden Stand der Technik darstellt, beschreibt eine Systemvorrichtung zur Steuerung einer PTZ-Kamera. Die Systemvorrichtung umfasst eine mobile Einrichtung mit einem Beschleunigungssensor und einem Berührungssensor. Durch die von dem Beschleunigungssensor erfassten Beschleunigungsdaten und die von dem Berührungssensor erfassten Berührungsdaten erfolgt eine Steuerung der PTZ-Kamera.

Aus der US 2012/0127319 ist eine Vorrichtung zum Steuern einer entfernten Kamera bekannt. Die Vorrichtung enthält ein Gehäuse und einen Prozessor innerhalb des Gehäuses. Ein Transceiver, der mit dem Prozessor verbunden ist, kommuniziert mit einem entfernten Server. Der entfernte Server ist mit der entfernten Kamera gekoppelt. Ein Bewegungsverfolgungskomponente ist mechanisch mit dem Gehäuse gekoppelt und elektrisch mit dem Prozessor gekoppelt. Die Bewegungsverfolgungskomponente erzeugt ein Bewegungssignal. Der entfernte Server steuert einen Parameter der entfernten Kamera in Reaktion auf das Bewegungssignal. Eine Anzeige ist mit dem Prozessor gekoppelt, um das Ausgangssignals der entfernten Kameraanzuzeigen. Das Ausgangssignal ist mit dem Parameter der entfernten Kamera verknüpft.

Die US 2012/0038549 A1 bezieht sich auf Schnittstellen und Verfahren zum Erzeugen von Eingaben für Softwareanwendungen, basierend auf der absoluten Lage eines Gegenstandes, der von einem Benutzer in einer dreidimensionalen Umgebung manipuliert oder getragen wird. Absolute Lage in diesem Sinne bedeutet sowohl die Position als auch die Orientierung des Gegenstandes, wie er in einem stabilen Rahmen beschrieben ist, der in dieser dreidimensionalen Umgebung definiert ist. Das Dokument beschreibt, wie die absolute Lage mit optischer Hardware und Methoden ermittelt wird, und wie mindestens einer der ermittelten absoluten Lage-Parameter auf die drei Translations- und drei Rotationsfreiheitsgrade abgebildet wird, die dem Gegenstand zur Verfügung stehen, um nützliche Eingaben zu erzeugen. Die Anwendungen, die am meisten von den Schnittstellen und Verfahren profitieren können, beinhalten 3D virtuelle Räume, einschließlich Augmented-Reality- und Mixed-Reality-Umgebungen.

### Offenbarung der Erfindung

Im Rahmen der Erfindung wird eine mobile Empfangseinheit mit den Merkmalen des Anspruchs 1, ein Verfahren mit den Merkmalen des Anspruchs 7 und ein Computerprogramm mit den Merkmalen des Anspruchs 8 offenbart. Bevorzugte oder vorteilhafte Ausführungsformen der Erfindung ergeben sich aus den Unteransprüchen, der nachfolgenden Beschreibung sowie den beigefügten Figuren.

Die Erfindung betrifft eine mobile Empfangseinheit zur Steuerung einer Aktorik zur Einstellung eines Schwenk winkels einer Kamera. Der Schwenkwinkel der Kamera verläuft um eine Pan-Achse, insbesondere eine vertikal verlaufende Achse. Der Neigungswinkel der Kamera verläuft um eine Tilt-Achse, insbesondere eine horizontal verlaufende Achse, welche senkrecht zu der Blickrichtung der Kamera ausgerichtet ist. Die Kamera weist durch die Pan-Achse und/oder Tilt-Achse somit mindestens einen, jedoch bevorzugt genau zwei rotatorische Freiheitsgrade auf. Bei einer Veränderung des Schwenk- und/oder Neigungswinkels der Kamera um die Pan- und/oder Tilt-Achse ist die Blickrichtung der Kamera verändert. Auf diese Weise können von der Kamera verschiedene Bereiche z. B. eines Raums oder eines Überwachungsbereichs erfasst werden.

Die Steuerung der Aktorik erfolgt über eine manuelle Bedienung der mobilen Empfangseinheit. Insbesondere ist die mobile Empfangseinheit tragbar für einen Benutzer ausgebildet und/oder ortsunabhängig einsetzbar. Vorzugsweise ist die die Kamera mittels der Aktorik um die Pan-Achse in einem Schwenkwinkel von 0° - 360° verschwenkbar. Alternativ oder optional ergänzend ist die Kamera mittels der Aktorik um die Tilt-Achse z. B. in einem Neigungswinkel von 0° - 180°, insbesondere in einem Neigungswinkel von 0° - 90° neigbar. Bei der Aktorik handelt es sich z. B. um einen Schrittmotor, jedoch bevorzugt um einen Stellmotor.

Die mobile Empfangseinheit umfasst eine Anzeigeeinrichtung zur Anzeige des durch die Kamera erfassten Bildes. Besonders bevorzugt ist die mobile Empfangseinheit ausgebildet, ein aktuelles Bild oder Echtzeitbild der Kamera anzuzeigen. Insbesondere ist die Anzeigeeinrichtung als eine Bildschirmfläche ausgebildet.

Die mobile Empfangseinheit umfasst zur Bestimmung von Steuerbefehlen für die Aktorik eine Steuereinrichtung. Die Bestimmung der Steuerbefehle erfolgt insbesondere durch die Erfassung einer Befehlseingabe des Benutzers zur gewünschten Einstellung des Schwenk- und/oder Neigungswinkels der Kamera.

Die mobile Empfangseinheit umfasst eine Sendeeinheit zur Übertragung der Steuerbefehle an die Aktorik. Die Aktorik ist ausgebildet, die Steuerbefehle auszuführen. Die Befehlseingabe des Benutzers zur Einstellung des Schwenk- und/oder Neigungswinkels der Kamera ist somit umgesetzt. Folglich ist die vom Benutzer gewünschte Blickrichtung der Kamera zur Erfassung des gewünschten Bildes eingestellt.

Im Rahmen der Erfindung wird vorgeschlagen, dass die Steuereinrichtung eine Gyrosensorik zur Erfassung einer relativen Winkeländerung der mobilen Empfangseinheit um mindestens eine Achse aufweist, wobei durch die relative Winkeländerung ein Steuerbefehl für eine relative Winkeländerung des Schwenkwinkels der Kamera bestimmt wird. Die relative Winkeländerung der mobilen Empfangseinheit stellt somit die Befehlseingabe des Benutzers dar. Bei der relativen Winkeländerung handelt es sich um eine rotatorische Bewegung der mobilen Empfangseinheit um die mindestens eine Achse. Die relative Winkeländerung der mobilen Empfangseinheit erfolgt von einem Ursprungszustand in einen Zielzustand, wobei die Differenz von dem Ursprungszustand in den Zielzustand um die mindestens eine Achse die relative Winkeländerung der Kamera von einer Ursprungseinstellung in eine Zieleinstellung vorzugsweise um die Pan- und/oder Tilt-Achse vorgibt. Durch die relative Winkeländerung der mobilen Empfangseinheit wird die Kamera folglich in die vom Benutzer gewünschte Blickrichtung bewegt.

Die Gyrosensorik misst insbesondere die Winkelgeschwindigkeit der mobilen Empfangseinheit entlang der mindestens einen Achse, wobei anhand der gemessenen Winkelgeschwindigkeit die relative Winkeländerung der mobilen Empfangseinheit um die mindestens eine Achse bestimmt ist. Z. B. lässt sich die relative Winkeländerung der mobilen Empfangseinheit durch Integration der gemessenen Winkelgeschwindigkeit ableiten. Beispielsweise ist die Gyrosensorik als ein Drehratensensor ausgebildet.

Die Steuereinrichtung umfasst eine Kompasssensorik zur Erfassung einer absoluten Winkelposition der mobilen Empfangseinheit um mindestens eine Achse, wobei durch die absolute Winkelposition ein Steuerbefehl für eine absolute Winkeleinstellung des Schwenkwinkels der Kamera bestimmt wird. Ein Betrag der absoluten Winkeleinstellung des Schwenkwinkels ist somit stets einem Betrag der vom Benutzer eingestellten absoluten Winkelposition zugeordnet. Die absolute Winkelposition entspricht der aktuellen Ausrichtungsposition der mobilen Empfangseinheit in eine Richtung. Die absolute Winkelposition kann beispielsweise nach Nord, Ost, Süd, West oder Nord, Nord/Ost, Süd/Ost, Süd, Süd/West, West, Nord/West oder auch in Gradmaßen von 0° - 360° untergliedert sein, wobei z. B. 0° Norden, 90° Osten, 180° Süden, 270° Westen zugeordnet ist.

Die relative Winkeländerung bzw. die absolute Winkelposition der mobilen Empfangseinheit ermöglicht dem Benutzer eine direkte Ansteuerung der Aktorik. Zusätzliche Hilfselemente wie z. B. ein Joystick für die Befehlseingabe sind auf diese Weise vermieden. Folglich ist eine kompakte Ausführung bei einer zugleich übersichtlichen und intuitiven Bedienung der mobilen Empfangseinheit umgesetzt. Des Weiteren umfassen mobile Empfangsgeräte des heutigen Standards regelmäßig eine Gyro- und/oder eine Kompasssensorik, so dass keine zusätzlichen Kosten für die Erfassung der relativen Winkeländerung bzw der absoluten Winkelposition anfallen.

In einer bevorzugten Ausführungsform ist die Gyrosensorik und/oder die Kompasssensorik durch den Benutzer ein- und ausschaltbar. Das Ein- und Ausschalten erfolgt vorzugsweise über eine Bedieneinrichtung. Z. B. ist die Bedieneinrichtung als eine Maus, Tastatur, jedoch bevorzugt als ein in der Anzeigeeinrichtung integrierter Touchscreen ausgebildet. Umfasst die mobile Empfangseinheit sowohl die Gyrosensorik, als auch die Kompasssensorik, ist vorzugsweise vorgesehen, dass diese unabhängig voneinander ein- und ausschaltbar sind. Auf diese Weise kann der Benutzer bestimmen, ob eine relative Winkeländerung der mobilen Empfangseinheit und/oder eine absolute Winkelposition der mobilen Empfangseinheit erfasst werden soll. Somit kann der Benutzer die Einstellung der Kamera individuell nach seinen Wünschen vornehmen. Alternativ ist möglich, dass die Gyrosensorik und die Kompasssensorik in Kombination ein- und ausschaltbar sind. Es liegt jedoch ebenso im Rahmen der Erfindung, dass die Gyrosensorik und/oder die Kompasssensorik beim Einschalten der mobilen Empfangseinheit und/oder eines Computerprogramms automatisch eingeschaltet werden.

Bevorzugt ist, dass beim Einschalten oder einem Aktivieren oder einem Zurücksetzen der Gyrosensorik oder der mobilen Empfangseinheit bzw. des Computerprogramms stets von dem Ursprungszustand der mobilen Empfangseinheit ausgegangen wird, wobei der Ursprungszustand durch eine Lageposition der mobilen Empfangseinheit definiert ist. Z. B. ist der Ursprungszustand als horizontale Lage der mobilen Empfangseinheit festgelegt. Der festgelegte Ursprungszustand ermöglicht, dass die relative Winkeländerung der mobilen Empfangseinheit stets von einer definierten Lageposition ausgehend erfasst wird.

Hinsichtlich der Gyrosensorik ist es bevorzugt, dass die relative Winkeländerung der mobilen Empfangseinheit um eine Schwenkachse als die Achse von dem Ursprungszustand in einen Schwenkzustand und/oder um eine Neigeachse als die Achse von dem Ursprungszustand in einen Neigezustand erfasst wird. Der Schwenkzustand und/oder der Neigezustand bilden den Zielzustand der mobilen Empfangseinheit. Insbesondere ist die Schwenkachse der mobilen Empfangseinheit der Pan-Achse der Kamera und die Neigeachse der mobilen Empfangseinheit der Tilt-Achse der Kamera zugeordnet. Durch die relative Winkeländerung der mobilen Empfangseinheit um die Schwenkachse wird der Steuerbefehl für die relative Winkeländerung des Schwenkwinkels der Kamera und/oder durch die relative Winkeländerung der mobilen Empfangseinheit um die Neigeachse der Steuerbefehl für die relative Winkeländerung des Neigungswinkels der Kamera bestimmt.

Eine bevorzugte Umsetzung der Erfindung sieht vor, dass die Schwenkachse als vertikal verlaufende Achse und die Neigeachse als horizontal verlaufende Achse festgelegt ist. Die vertikal verlaufende Achse als die Schwenkachse erstreckt sich in Lotrichtung. Insbesondere ist die vertikal verlaufende Achse als eine Absolutachse definiert. Somit verläuft die Schwenkachse stets, d. h. auch im Neigezustand der mobilen Empfangseinheit, in Lotrichtung. Insbesondere ist vorgesehen, dass die Schwenkachse und die Neigeachse orthogonal sind. Die horizontal verlaufende Neigeachse ist z. B. derart entlang der mobilen Empfangseinheit ausgerichtet, dass die mobile Empfangseinheit bei einer Neigebewegung um die Neigeachse, in gerader Blickrichtung des Benutzers auf die Anzeigeeinrichtung aus betrachtend, vom Benutzer weggeneigt und zum Benutzer geneigt wird. Als beispielhafte Alternative ist die horizontal verlaufende Neigeachse derart entlang der mobilen Empfangseinheit ausgerichtet, dass bei einer Neigebewegung um die Neigeachse, in gerader Blickrichtung des Benutzers auf die Anzeigeeinrichtung aus betrachtend, nach links und rechts geneigt wird.

Bevorzugt wird die Schwenkachse beispielsweise durch die eigene Achse des Benutzers oder eine dazu parallele Achse, die durch die mobile Empfangseinheit verläuft, gebildet, so dass bei einer Drehung des Benutzers um die eigene Achse eine relative Winkeländerung der mobilen Empfangseinheit um die Schwenkachse erfolgt. Es ist vorgesehen, dass die Schwenkachse als eine Rotationsachse der mobilen Empfangseinheit ausgebildet ist, wobei die Rotationsachse sich als Normale zu der Bildschirmfläche der Anzeigeeinrichtung erstreckt. Die Schwenkung der mobilen Empfangseinheit erfolgt somit um dessen Rotationsachse.

Es ist besonders bevorzugt, dass der Betrag der relativen Winkeländerung des Schwenkwinkels und/oder des Neigungswinkels der Kamera äquivalent, insbesondere gleich groß, zu dem Betrag der relativen Winkeländerung der mobilen Empfangseinheit um die mindestens eine Achse ist. Die Winkeländerung der Kamera ist somit linear proportional zu der relativen Winkeländerung der mobilen Empfangseinheit. Die mobile Empfangseinheit bildet durch den äquivalenten Winkeländerungsbetrag mit der Kamera ein virtuelles Fenster für den Benutzer, da der Betrag vom Ursprungszustand in den Schwenk- und/oder Neigezustand der mobilen Empfangseinheit dem Betrag der veränderten Blickrichtung der Kamera um den Schwenk- und/oder Neigungswinkel entspricht. Somit setzt die Kamera analoge Bewegungen zu den vom Benutzer ausgeführten Bewegungen der mobilen Empfangseinheit um. Auf diese Weise ist eine einfache und schnell verständliche Handhabung der mobilen Empfangseinheit zur Einstellung des Schwenk- und/oder Neigungswinkels der Kamera umgesetzt.

Vom konstruktiven Aufbau ist bevorzugt, dass die Gyrosensorik einen ersten und einen zweiten Gyrosensor umfasst. Dabei ist insbesondere vorgesehen, dass der erste Gyrosensor der Schwenkachse und der zweite Gyrosensor der Neigeachse zugeordnet ist. Auf diese Weise kann die relative Winkeländerung sowohl um die Schwenkachse, als auch um die Neigeachse erfasst werden. Optional ergänzend kann die Gyrosensorik einen dritten Gyrosensor umfassen, mittels diesem eine dritte Rotationsbewegung der mobilen Empfangseinheit um eine Achse erfasst wird.

In einer bevorzugten Weiterbildung ist vorgesehen, dass die relative Winkeländerung der mobilen Empfangseinheit um die Schwenkachse von 0° - 360° einer äquivalenten Einstellung des Schwenkwinkels von 0° - 360° entspricht.

In einer weiteren bevorzugten Weiterbildung ist vorgesehen, dass die relative Winkeländerung der mobilen Empfangseinheit um die Neigeachse von 0° -180° einer äquivalenten Einstellung des Neigungswinkels von 0° - 180° entspricht.

Alternativ zur äquivalenten relativen Winkeländerung des Schwenkwinkels und/oder des Neigungswinkels der Kamera zu der relativen Winkeländerung der mobilen Empfangseinheit um die mindestens eine Achse ist möglich, dass die relative Winkeländerung der Empfangseinheit um die mindestens eine Achse zur relativen Winkeländerung des Schwenkwinkels und/oder des Neigungswinkels skaliert ist. Die Skalierung kann beispielsweise durch eine Look-up Tabelle festgelegt sein. Die geringer skalierte Winkeländerung der mobilen Empfangseinheit um die Schwenkachse und/oder Neigeachse ermöglicht bei einer minimalen Schwenkbewegung und/oder Neigebewegung den vollständigen Schwenkwinkel und/oder Neigungswinkel der Kamera auszunutzen. Eine einfache Handhabung der mobilen Empfangseinheit zur Steuerung der Aktorik ist somit umgesetzt.

In einer bevorzugten Weiterbildung der Skalierung ist vorgesehen, dass die relative Winkeländerung der mobilen Empfangseinheit um die Schwenkachse von 0° - 180°, insbesondere von 0° - 90°, im speziellen von 0° - 45° einer Einstellung des Schwenkwinkels von 0° - 360° entspricht.

In einer weiteren bevorzugten Weiterbildung der Skalierung ist vorgesehen, dass die relative Winkeländerung der mobilen Empfangseinheit um die Neigungsachse von 0° - 90°, insbesondere von 0° - 45°, im speziellen von 0° - 30° einer Einstellung des Neigungswinkels von 0° - 180° entspricht.

Bezüglich der Kompasssensorik ist vorgesehen, dass der Betrag der absoluten Winkeleinstellung des Schwenkwinkels äquivalent zum Betrag der absoluten Winkelposition der mobilen Empfangseinheit ist oder dieser in Bezug auf ein Weltkoordinatensystem entspricht. Die Kamera und die mobile Empfangseinheit zeigen somit stets in die gleiche Richtung. Durch die Festlegung der absoluten Blickrichtung der Kamera ist vorteilhafterweise eine Orientierungshilfe für den Benutzer erzielt.

Es ist vorgesehen, dass die absolute Winkelposition auf der Anzeigeeinrichtung angezeigt ist. Der Benutzer ist somit in Kenntnis gesetzt, in welche Richtung die Kamera aktuell ausgerichtet ist. Folglich ist es für den Benutzer möglich, festzulegen, in welche Richtung die Kamera auszurichten ist. Alternativ oder optional ergänzend sind auf der Anzeigeeinrichtung eine Mehrzahl an Richtungen, wie z. B. Norden, Osten, Süden und Westen aufgezeigt, um dem Benutzer die gewünschte Ausrichtung der Kamera zur erleichtern.

Weist die Steuereinrichtung die Gyrosensorik und die Kompasssensorik auf, ist z. B. vorgesehen, dass zur Einstellung des Neigungswinkels der Kamera die relative Winkeländerung um die Neigeachse und zur Einstellung des Schwenkwinkels der Kamera die absolute Winkelposition erfasst wird.

Zur Einstellung des Schwenkwinkels der Kamera erfolgt in einem ersten Schritt die absolute Winkeleinstellung des Schwenkwinkels und in einem zweiten und jedem weiteren Schritt die relative Winkeländerung des Schwenkwinkels. Somit wird in dem ersten Schritt mittels der Kompasssensorik die absolute Winkelposition erfasst, wobei der Ursprungszustand der absoluten Winkelposition gleichgesetzt wird. In dem zweiten und jedem weiteren Schritt erfolgt mittels der Gyrosensorik die Erfassung der relativen Winkeländerung der mobilen Empfangseinheit um die Schwenkachse. Aufgrund der Gleichsetzung des Ursprungszustands und der erfassten absoluten Winkelposition entspricht bei einer relativen Winkeländerung der Zielzustand stets der absoluten Winkelposition. Die Gleichsetzung der absoluten Winkelposition und des Ursprungszustands und ein äquivalenter Winkeländerungsbetrag der mobilen Empfangseinheit und der Kamera erzielt vorteilhafterweise stets eine Übereinstimmung der Richtung der Empfangseinheit und der Kamera.

Demgegenüber ist es möglich, dass die relative Winkeländerung um die Schwenkachse parallel zu der absoluten Winkelposition erfasst wird. Die relative Winkeländerung und die absolute Winkelposition werden vorzugsweise in Korrelation gesetzt, um eine präzise Auswertung der ausgerichteten mobilen Empfangseinheit und folglich eine präzise Einstellung des Schwenkwinkels der Kamera zu erzielen.

In einer möglichen konstruktiven Umsetzung umfasst die Empfangseinheit eine Bedieneinrichtung, wobei mittels der Bedieneinrichtung ein Zoom des von der Kamera erfassten Bildes oder ein Zoom der Kamera steuerbar ist. Die Bedieneinrichtung ist z. B. als eine Maus, jedoch bevorzugt als ein Touchscreen ausgebildet, welcher z. B. in der Anzeigeeinrichtung integriert ist.

Bei einer bevorzugten Ausführungsform ist der mobilen Empfangseinheit mindestens oder genau eine, zwei, drei oder eine Mehrzahl an Kameras zugeordnet. Diese Ausgestaltung hat den Vorteil, eine Mehrzahl an Räumen o. ä. überwachen zu können. Sind der mobilen Empfangseinheit mindestens zwei Kameras zugeordnet, ist vorzugsweise ein Umschalten auf eine der Kameras möglich. Somit ist eine übersichtliche Darstellung des von der ausgewählten Kamera erfassten Bildes auf der Anzeigeeinrichtung erzielt.

Eine bevorzugte konstruktive Umsetzung der Erfindung sieht vor, dass die mobile Empfangseinheit als ein Tablet oder als ein Mobiltelefon ausgebildet ist. Tablets und Mobiltelefone sind für einen Benutzer meist intuitiv bedienbar und erleichtern somit die Befehlseingabe zur Einstellung des Schwenk- und/oder Neigungswinkels der Kamera. Insbesondere werden die Steuerbefehle in ein Internet oder ein öffentliches Telefonnetzwerk übertragen.

Auch eine Kombination der mobilen Empfangseinheit, der Aktorik sowie der Kamera können einen Gegenstand der Erfindung bilden.

Einen weiteren Gegenstand der Erfindung betrifft ein Verfahren zur Bedienung einer mobilen Empfangseinheit, vorzugsweise nach der vorhergehenden Beschreibung. Bei einer relativen Winkeländerung der mobilen Empfangseinheit um die mindestens eine Achse wird der Schwenk- und/oder Neigungswinkel der Kamera verändert. Alternativ oder optional ergänzend wird bei einer Veränderung der absoluten Winkelposition der mobilen Empfangseinheit die absolute Winkeleinstellung des Schwenkwinkels verändert.

Einen weiteren Gegenstand der Erfindung betrifft ein Computerprogramm mit Programmcode-Mitteln, um alle Schritte des genannten Verfahrens durchzuführen, wenn das Programm auf einem Computer und/oder der mobilen Empfangseinheit ausgeführt wird.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: in einem Blockschaltbild den prinzipiellen Aufbau einer erfindungsgemäßen mobilen Empfangseinheit mit einer Gyrosensorik und/oder einer Kompasssensorik;
- Figur 2a: die mobile Empfangseinheit aus Figur 1 mit der Gyrosensorik als ein erstes Ausführungsbeispiel der Erfindung mit einer zugeordneten Kamera;
- Figur 2b: die mobile Empfangseinheit in einer, im Vergleich zur mobilen Empfangseinheit aus Figur 2a, relativen Winkeländerung um eine Schwenkachse;
(Fortsetzung ursprüngliche Beschreibungsseite 11)
- Figur 2c: die mobile Empfangseinheit in einer, im Vergleich zur mobilen Empfangseinheit aus Figur 2a, relativen Winkeländerung um eine Neigeachse;
- Figur 3: die mobile Empfangseinheit aus Figur 1 mit der Kompasssensorik als ein zweites Ausführungsbeispiel der Erfindung mit der zugeordneten Kamera;
- Figur 4: die mobile Empfangseinheit mit der Gyro- und der Kompasssensorik aus Figur 1 als ein drittes Ausführungsbeispiel der Erfindung mit der zugeordneten Kamera
- Figur 5: eine Schwenkung des Benutzers mit der mobilen Empfangseinheit aus Figur 1.

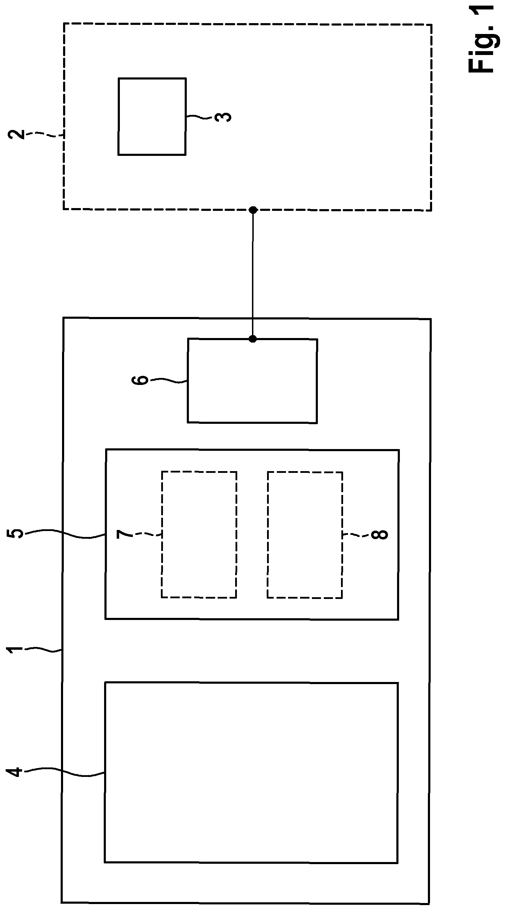

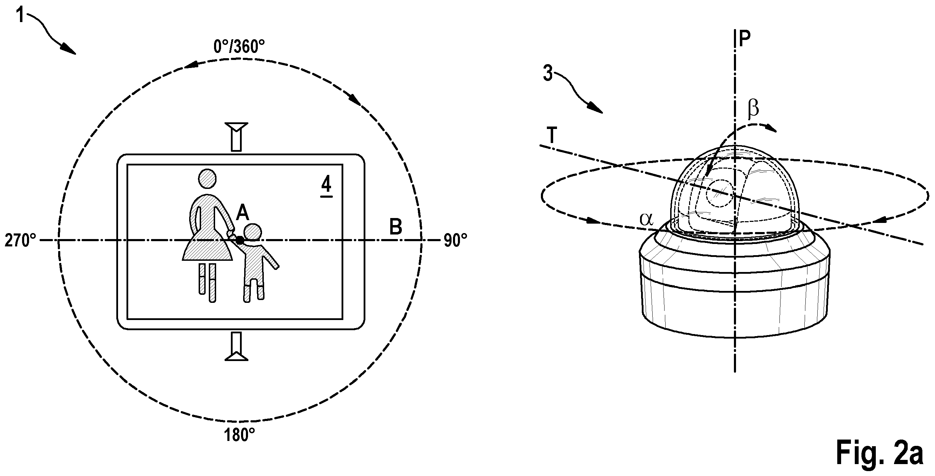

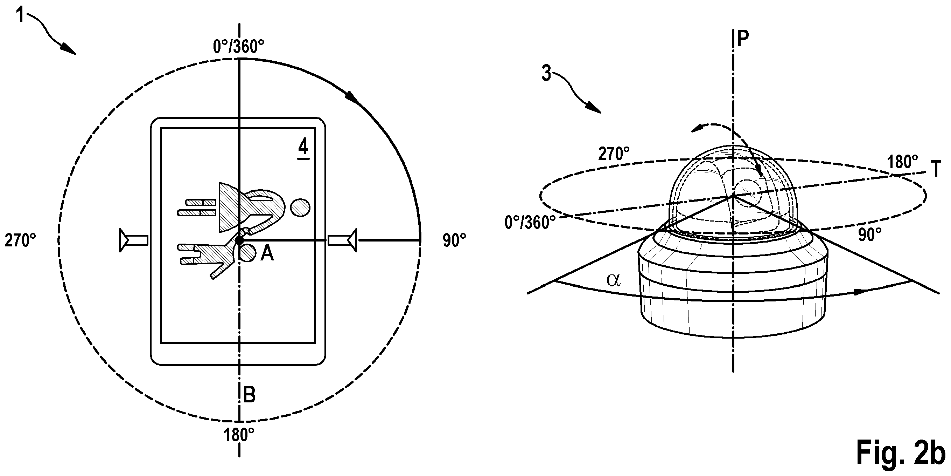

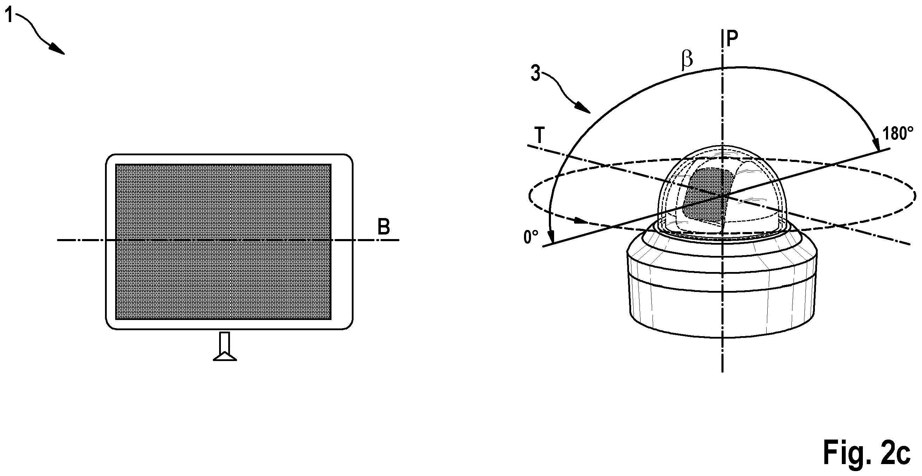

Figur 1 zeigt in einem Blockschaltbild den prinzipiellen Aufbau einer mobilen Empfangseinheit 1. Bei der mobilen Empfangseinheit 1 handelt es sich z. B. um ein Tablet oder ein Mobiltelefon. Die mobile Empfangseinheit 1 ist dazu ausgebildet, eine Aktorik 2 anzusteuern. Auf der Aktorik 2 ist eine Kamera 3 (hier nicht dargestellt) angeordnet, wobei durch die Steuerung der Aktorik 2 ein Schwenk- und/oder Neigungswinkel α, β der Kamera 3 eingestellt wird. Bei dem Schwenkwinkel α handelt es sich um einen Schwenkung der Kamera um eine Pan-Achse P und bei dem Schwenkwinkel β um eine Neigung der Kamera um eine Tilt-Achse T (s. Figuren 2 - 4). Die Schwenkung der Kamera 3 um die Pan-Achse P ist z. B. von 0° - 360° und/oder die Neigung der Kamera 3 um die Tilt-Achse T z. B. von 0° - 180° möglich. Die Einstellung des Schwenk- und/oder Neigungswinkels α, β ermöglicht die Blickrichtung der Kamera 3 zu verändern, so dass verschiedene Raumbereiche eines Raums o. ä. durch die Kamera 3 erfasst werden können.

Die mobile Empfangseinheit 1 umfasst eine Anzeigeeinrichtung 4 zur Anzeige des von der Kamera 3 erfassten Bildes. Die Anzeigeeinrichtung 4 ist z. B. als eine Bildschirmfläche mit einem integrierten Touchscreen ausgebildet.

Die mobile Empfangseinheit 1 umfasst eine Steuereinrichtung 5 zur Bestimmung von Steuerbefehlen für die Aktorik 2. Bei den Steuerbefehlen handelt es sich um ausgewertete Befehlseingaben eines Benutzers 9 (hier nicht dargestellt) zur Einstellung des Schwenk- und/oder Neigungswinkels α, β der Kamera 3. Die Steuerbefehle werden mittels einer Sendeeinheit 6 an die Aktorik 2 übermittelt, woraufhin die Aktorik 2 die Steuerbefehle ausführt.

Die Steuereinrichtung 7 umfasst eine Gyrosensorik 7 und/oder eine Kompasssensorik 8. Mittels der Gyrosensorik 7 und/oder der Kompasssensorik 8 werden die Steuerbefehle zur Einstellung des Schwenk- und/oder Neigungswinkels α, β bestimmt.

Mittels der Gyrosensorik 7 wird eine relative Winkeländerung der mobilen Empfangseinheit 1 um mindestens eine Achse A, B (s. Figuren 2 - 4) erfasst, wobei durch die relative Winkeländerung ein Steuerbefehl für eine relative Winkeländerung des Schwenkwinkels α und/oder des Neigungswinkels β der Kamera 3 bestimmt wird. Die mobile Empfangseinheit 1 wird bei der relativen Winkeländerung um die mindestens eine Achse A, B von einem Ursprungszustand in einen Zielzustand bewegt.

Mittels der Kompasssensorik 8 wird eine absolute Winkelposition der mobilen Empfangseinheit 1 um die mindestens eine Achse A erfasst, wobei durch die absolute Winkelposition ein Steuerbefehl für eine absolute Winkeleinstellung des Schwenkwinkels β der Kamera 3 bestimmt wird. Die absolute Winkelposition entspricht der aktuellen Ausrichtungsposition der mobilen Empfangseinheit 1.

Anhand der Ausführungsbeispiele der Figuren 2a - 4 soll die Einstellung des Schwenk- und/oder Neigungswinkels α, β mittels der Gyro- und/oder Kompasssensorik 7, 8 näher erläutert werden.

Figuren 2a - 2c zeigen die mobile Empfangseinheit 1 mit der Gyrosensorik 7 als ein erstes Ausführungsbeispiel der Erfindung und die durch die mobile Empfangseinheit 1 steuerbare Kamera 3.

In Figur 2a befindet sich die mobile Empfangseinheit 1 in dem Ursprungszustand. Bei dem Ursprungszustand befindet sich die mobile Empfangseinheit in einer horizontalen Lageposition, jedoch sind auch andere Lagepositionen als der Ursprungszustand möglich. Befindet sich die mobile Empfangseinheit 1 in dem Ursprungszustand, liegt keine relative Winkeländerung der mobilen Empfangseinheit 1 vor, so dass kein Steuerbefehl an die Aktorik 2 übermittelt wird.

Die Erfassung der relativen Winkeländerung der mobilen Empfangseinheit 1 erfolgt um eine Schwenkachse A und/oder um eine Neigeachse B als die mindestens eine Achse. Die Schwenkachse A verläuft vertikal und die Neigeachse B horizontal. Die relative Winkeländerung der mobilen Empfangseinheit 1 um die Schwenkachse A bestimmt eine relative Winkeländerung des Schwenkwinkels α der Kamera 3 um die Pan-Achse P und die relative Winkeländerung der mobilen Empfangseinheit 1 um die Neigeachse B bestimmt die relative Winkeländerung des Neigungswinkels β der Kamera 3 um die Tilt-Achse T.

Figur 2b zeigt beispielhaft eine mögliche relative Winkeländerung der mobilen Empfangseinheit 1 um die Schwenkachse A. Die Schwenkung der mobilen Empfangseinheit 1 erfolgt bei diesem Ausführungsbeispiel um die Rotationsachse der mobilen Empfangseinheit 1, wobei die Rotationsachse sich als Normale zu der Bildschirmfläche der Anzeigeeinrichtung 4 erstreckt. Alternativ kann die Schwenkachse A durch die eigene Achse des Benutzers 9 oder eine dazu parallele Achse oder in guter Näherung zu der eigenen Achse des Benutzers 9 als lotrechte Achse angenommen werden. Bevorzugt verläuft die lotrechte Achse durch die Gyrosensorik 7. Insbesondere wird die Schwenkachse A so gewählt, dass wenn der Benutzer 9 die mobile Empfangseinheit 1 vor sich hält und sich um die eigene Achse (Längsachse) dreht, der Schwenkwinkel α der Kamera 3 gleichlaufend mitgeführt wird. Dreht sich der Benutzer 9 nach links, wird die Kamera 3 nach links geschwenkt, dreht sich der Benutzer 9 sich nach rechts, so wird die Kamera 3 nach rechts geschwenkt. Bei einer 360° Drehung des Benutzers 9 um die eigene Achse wird die Kamera 3 ebenfalls um 360° geschwenkt.

Die mobile Empfangseinheit 1 wurde von dem Ursprungszustand in einen Schwenkzustand als der Zielzustand um die Schwenkachse A um 90° geschwenkt. Durch die relative Winkeländerung der mobilen Empfangseinheit 1 um die Schwenkachse A erfolgte eine relative Winkeländerung der Kamera 3 von einer Ursprungseinstellung, wie in Figur 2a gezeigt, in eine Zieleinstellung, wie in Figur 2b gezeigt, um die Pan-Achse P. Der Betrag der relativen Winkeländerung des Schwenkwinkels α der Kamera 3 ist äquivalent zu dem Betrag der relativen Winkeländerung der mobilen Empfangseinheit 1 um die Schwenkachse A. Somit liegt durch die relative Winkeländerung von 90° der mobilen Empfangseinheit 1 eine relative Winkeländerung der Kamera 3 ebenfalls von 90° vor. Alternativ zum äquivalenten Winkeländerungsbetrag ist auch eine Skalierung der relativen Winkeländerung der Kamera 3 zu der mobilen Empfangseinheit 1 möglich.

Figur 2c zeigt beispielhaft eine weitere mögliche relative Winkeländerung der mobilen Empfangseinheit 1 um die Neigeachse B. Die mobile Empfangseinheit 1 wurde von dem Ursprungszustand in einen Neigezustand als der Zielzustand um die Neigeachse B um 180° geneigt. Durch die relative Winkeländerung der mobilen Empfangseinheit 1 um die Neigeachse B erfolgte eine relative Winkeländerung der Kamera 3 von der Ursprungseinstellung, wie in Figur 2a gezeigt, in die Zieleinstellung, wie in Figur 2c gezeigt, um die Tilt-Achse T. Der Betrag der relativen Winkeländerung des Neigungswinkels β der Kamera 3 ist äquivalent zu dem Betrag der relativen Winkeländerung der mobilen Empfangseinheit 1 um die Neigeachse B. Somit liegt durch die relative Winkeländerung von 180° der mobilen Empfangseinheit 1 eine relative Winkeländerung der Kamera 3 ebenfalls von 180° vor. Es liegt die Rückseite der mobilen Empfangseinheit 1 zu der in Figur 2a gezeigten Vorderseite vor. Alternativ zum äquivalenten Winkeländerungsbetrag ist auch eine Skalierung der relativen Winkeländerung der Kamera 3 zu der mobilen Empfangseinheit 1 möglich.

Selbstverständlich ist auch eine kombinierte relative Winkeländerung des Schwenkwinkels α und des Neigungswinkels β der Kamera 3, wie in Figur 2b und 2c gezeigt, möglich. In diesem Fall wird mittels der Gyrosensorik 7 die relative Winkeländerung der mobilen Empfangseinheit 1 um die Schwenk- und Neigeachse A, B erfasst. Der Schwenk- und der Neigezustand bilden in diesem Fall gemeinsam den Zielzustand.

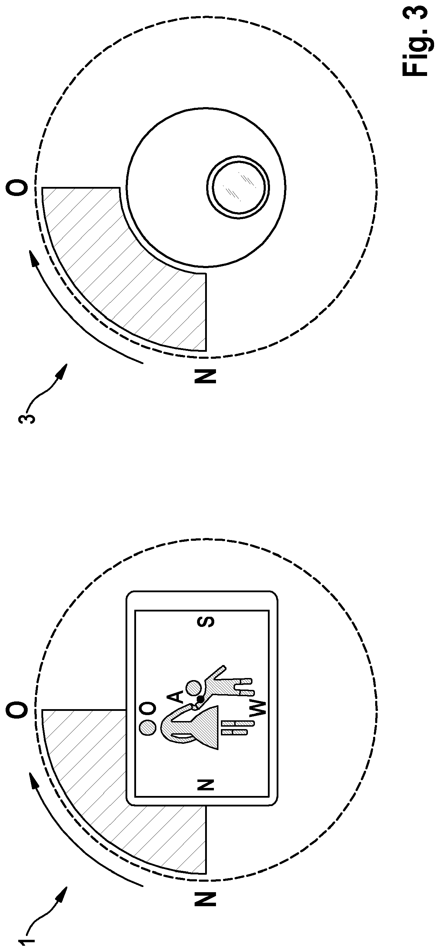

Figur 3 zeigt die mobile Empfangseinheit 1 mit der Kompasssensorik 8 als ein zweites Ausführungsbeispiel der Erfindung und die durch die mobile Empfangseinheit 1 steuerbare Kamera 3. Im Gegensatz zum Ausführungsbeispiel der Figur 2a bis 2c erfolgt keine Relativmessung, d. h. keine Erfassung der relativen Winkeländerung von dem Ursprungs- zum Zielzustand der mobilen Empfangseinheit 1, sondern eine Absolutmessung, nämlich die Erfassung der momentanen Ausrichtung der mobilen Empfangseinheit 1. Der Betrag der absoluten Winkeleinstellung des Schwenkwinkels α ist äquivalent zum Betrag der absoluten Winkelposition der mobilen Empfangseinheit 1. Somit zeigen die Kamera 3 und die Empfangseinheit 1 stets in die gleiche Richtung. Es erfolgte eine Schwenkbewegung der mobilen Empfangseinheit 1 von Norden nach Osten um die Schwenkachse A, so dass auch eine Schwenkung der Kamera 3 um die Pan-Achse P von Norden nach Osten erfolgte.

Auf der Anzeigeeinrichtung 6 sind eine Mehrzahl an Richtungen, nämlich Norden N, Osten O, Süden S und Westen W aufgezeigt. Dem Benutzer 9 ist auf diese Weise einerseits die aktuell eingestellte Ausrichtung der Kamera 3 aufgezeigt, andererseits ist die Ausrichtung der Kamera 3 gemäß den Wünschen des Benutzers 9 erleichtert.

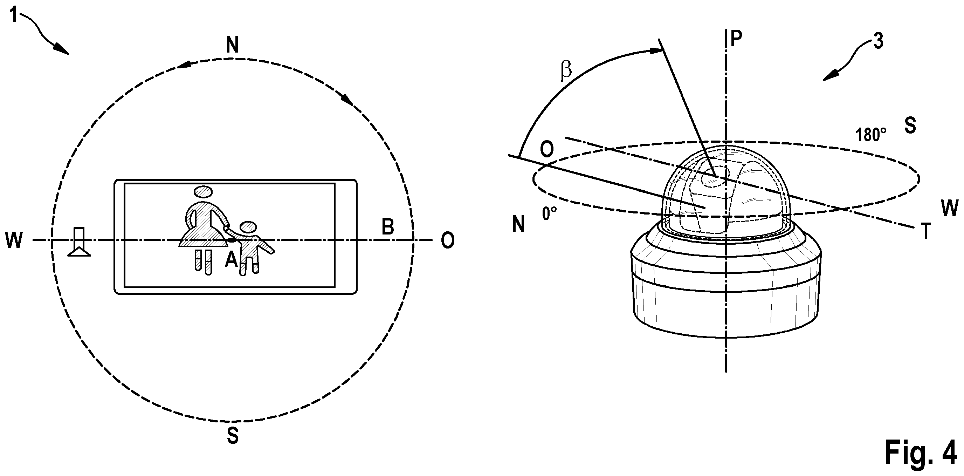

Figur 4 zeigt die mobile Empfangseinheit 1 mit der Gyro- und der Kompasssensorik 7, 8 aus Figur 1 als ein drittes Ausführungsbeispiel der Erfindung mit der zugeordneten Kamera 3.

Die Einstellung des Schwenkwinkels α der Kamera 3 erfolgt durch die Erfassung der absoluten Winkelposition α der mobilen Empfangseinheit 1 mittels der Kompasssensorik 8. Die Einstellung des Neigungswinkels β der Kamera 3 erfolgt durch die Erfassung der relativen Winkeländerung um die Neigeachse B mittels der Gyrosensorik 7. In Figur 4 ist eine Neigebewegung der mobilen Empfangseinheit 1 um die Neigeachse B um 45 ° dargestellt, wobei durch den äquivalenten Winkeländerungsbetrag die Kamera 3 um die Tilt-Achse ebenfalls um 45° geneigt wurde.

Optional ergänzend kann vorgesehen sein, dass parallel zur Erfassung der absoluten Winkelposition der mobilen Empfangseinheit 1 die relative Winkeländerung um die Schwenkachse A der mobilen Empfangseinheit 1 erfasst wird. Durch die Erfassung einer relativen Winkeländerung, z. B. 90°, und die Erfassung der absoluten Winkelposition, z. B. von Norden nach Osten, wird durch Korrelation der erfassten Ergebnisse ein zuverlässiges Ergebnis für die Einstellung des Schwenkwinkels α der Kamera 3 erzielt.

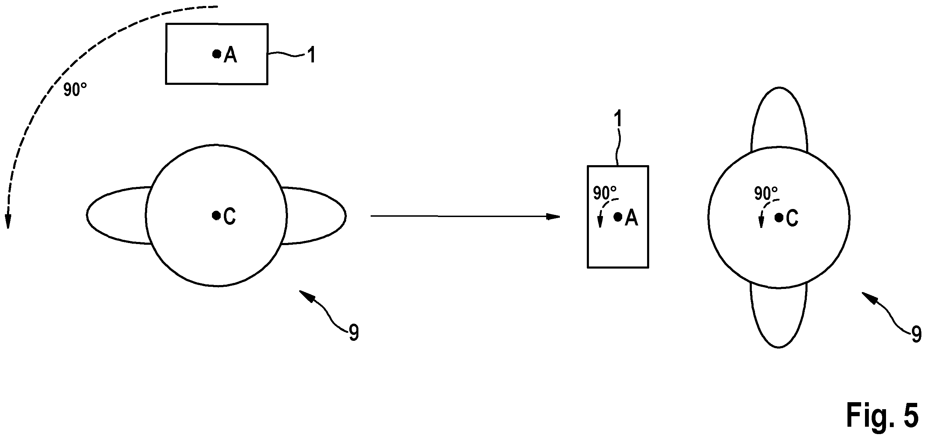

Figur 5 zeigt eine Schwenkung des Benutzers 9 mit der mobilen Empfangseinheit 1 aus Figur 1. Die Schwenkachse A der mobilen Empfangseinheit 1 verläuft parallel zu einer Benutzerachse C des Benutzers 9, wobei die Benutzerachse C des Benutzers 9 als lotrechte Achse ausgebildet ist. Beispielhaft wird eine Schwenkung des Benutzers 9 um 90° um die Benutzerachse C dargestellt, wobei durch die Schwenkung von 90° des Benutzers 9 die mobile Empfangseinheit 1 ebenfalls um 90° um die Schwenkachse A geschwenkt ist.

## Patentansprüche

1. Mobile Empfangseinheit (1) zur Steuerung einer Aktorik (2) zur Einstellung eines Schwenkwinkels (α) einer Kamera (3),
mit einer Anzeigeeinrichtung (4) zur Anzeige eines durch die Kamera (3) erfassten Bildes,
mit einer Steuereinrichtung (5) zur Bestimmung von Steuerbefehlen für die Aktorik (2),
mit einer Sendeeinheit (6) zur Übertragung der Steuerbefehle an die Aktorik (2),
wobei
die Steuereinrichtung (5) eine Gyrosensorik (7) zur Erfassung einer relativen Winkeländerung der mobilen Empfangseinheit (1) um mindestens eine Achse (A, B) aufweist, wobei durch die relative Winkeländerung ein Steuerbefehl für eine relative Winkeländerung des Schwenkwinkels (α) der Kamera (3) bestimmt wird,
und
die Steuereinrichtung (5) eine Kompasssensorik (8) zur Erfassung einer absoluten Winkelposition der mobilen Empfangseinheit (1) um mindestens eine Achse (A, B) aufweist, wobei durch die absolute Winkelposition ein Steuerbefehl für eine absolute Winkeleinstellung des Schwenkwinkels (α) der Kamera bestimmt wird,
**dadurch gekennzeichnet, dass**
die mobile Empfangseinheit (1) ausgebildet ist, dass zur Einstellung des Schwenkwinkels (α) der Kamera (3) in einem ersten Schritt die absolute Winkeleinstellung des Schwenkwinkels (α) der Kamera (3) durch Erfassung der absoluten Winkelposition der mobilen Empfangseinheit (1) mittels der Kompasssensorik (8) erfolgt und in einem zweiten und jedem weiteren Schritt die relative Winkeländerung des Schwenkwinkels (α) der Kamera (3) erfolgt, wobei die relative Winkeländerung der mobilen Empfangseinheit (1) um die Schwenkachse (A) mittels der Gyrosensorik (7) erfasst wird, wobei der Betrag der absoluten Winkeleinstellung des Schwenkwinkels (α) der Kamera (3) äquivalent zum Betrag der absoluten Winkelposition der mobilen Empfangseinheit (1) ist, wobei eine Schwenkung der mobilen Empfangseinheit (1) um deren durch eine Normale einer Bildschirmfläche der Anzeigeeinrichtung (4) gebildete Rotationsachse erfolgt, wobei die absolute Winkelposition auf der Anzeigeeinrichtung (4) angezeigt ist.

2. Mobile Empfangseinheit (1) nach Anspruch 1, **dadurch gekennzeichnet, dass** die relative Winkeländerung der mobilen Empfangseinheit (1) um eine Schwenkachse (A) als die Achse von einem Ursprungszustand in einen Schwenkzustand erfasst wird, wobei durch die relative Winkeländerung der mobilen Empfangseinheit (1) um die Schwenkachse (A) der Steuerbefehl für die relative Winkeländerung des Schwenkwinkels (α) der Kamera (3) bestimmt wird.

3. Mobile Empfangseinheit (1) nach Anspruch 2, **dadurch gekennzeichnet, dass** die Gyrosensorik (7) mindestens einen ersten und einen zweiten Gyrosensor umfasst, wobei der erste Gyrosensor der Schwenkachse (A) und der zweite Gyrosensor der Neigeachse (B) zugeordnet ist.

4. Mobile Empfangseinheit (1) nach Anspruch 2, **dadurch gekennzeichnet, dass** der Betrag der relativen Winkeländerung des Schwenkwinkels (α) der Kamera (3) äquivalent zu dem Betrag der relativen Winkeländerung der mobilen Empfangseinheit (1) um die mindestens eine Achse (A, B) ist.

5. Mobile Empfangseinheit (1) nach einem der vorhergehenden Ansprüche, **dadurch gekennzeichnet, dass** die mobile Empfangseinheit (1) eine Bedieneinrichtung umfasst, wobei mittels der Bedieneinrichtung ein Zoom des Bildes steuerbar ist.

6. Mobile Empfangseinheit (1) nach einem der vorhergehenden Ansprüche, **dadurch gekennzeichnet, dass** die mobile Empfangseinheit (1) als ein Tablet oder als ein Mobiltelefon ausgebildet ist.

7. Verfahren zur Bedienung einer mobilen Empfangseinheit (1), vorzugsweise nach einem der vorhergehenden Ansprüche,
wobei bei einer relativen Winkeländerung der mobilen Empfangseinheit (1) um die mindestens eine Achse (A, B) der Schwenkwinkel (α) verändert wird,
und wobei bei einer Veränderung der absoluten Winkelposition der mobilen Empfangseinheit (1) die absolute Winkeleinstellung des Schwenkwinkels (α) der Kamera (3) verändert wird,
wobei zur Einstellung des Schwenkwinkels (α) der Kamera (3) in einem ersten Schritt die absolute Winkeleinstellung des Schwenkwinkels der Kamera (3) durch Erfassung der absoluten Winkelposition der mobilen Empfangseinheit (1) mittels der Kompasssensorik (8) erfolgt und in einem zweiten und jedem weiteren Schritt die relative Winkeländerung des Schwenkwinkels (α) der Kamera (3) erfolgt, wobei die relative Winkeländerung der mobilen Empfangseinheit (1) um die Schwenkachse (A) mittels der Gyrosensorik (7) erfasst wird, wobei der Betrag der absoluten Winkeleinstellung des Schwenkwinkels (α) der Kamera (3) äquivalent zum Betrag der absoluten Winkelposition der mobilen Empfangseinheit (1) ist, wobei eine Schwenkung der mobilen Empfangseinheit (1) um deren durch eine Normale einer Bildschirmfläche der Anzeigeeinrichtung (4) gebildete Rotationsachse erfolgt wobei die absolute Winkelposition auf der Anzeigeeinrichtung (4) angezeigt wird.

8. Computerprogramm mit Programmcode-Mitteln, um alle Schritte des Verfahrens nach Anspruch 7 durchzuführen, wenn das Programm auf einem Computer und der mobilen Empfangseinheit (1) von jedem Beliebigen der Ansprüche 1 bis 6 ausgeführt wird.

## Claims

1. Mobile receiver unit (1) for controlling an actuator system (2) for setting a panning angle (α) of a camera (3),
having a display device (4) for displaying an image captured by the camera (3),
having a control device (5) for determining control commands for the actuator system (2),
having a transmission unit (6) for transmitting the control commands to the actuator system (2),
wherein
the control device (5) includes a gyro sensor system (7) for capturing a relative angle change of the mobile receiver unit (1) about at least one axis (A, B), wherein a control command for a relative angle change of the panning angle (α) of the camera (3) is determined by way of said relative angle change,
and
the control device (5) includes a compass sensor system (8) for capturing an absolute angular position of the mobile receiving unit (1) about at least one axis (A, B), wherein a control command for an absolute angle setting of the panning angle (α) of the camera is determined by way of said absolute angular position,
**characterized in that**
the mobile receiver unit (1) is configured such that, for setting the panning angle (α) of the camera (3), the absolute angle setting of the panning angle (α) of the camera (3) is effected in a first step by capturing the absolute angular position of the mobile receiver unit (1) using the compass sensor system (8) and, in a second and each further step, the relative angle change of the panning angle (α) of the camera (3) is effected, wherein the relative angle change of the mobile receiver unit (1) about the panning axis (A) is captured using the gyro sensor system (7), wherein the absolute value of the absolute angle setting of the panning angle (α) of the camera (3) is equivalent to the absolute value of the absolute angular position of the mobile receiver unit (1),
wherein panning of the mobile receiver unit (1) about the rotational axis thereof, which is formed by a normal of a screen surface of the display device (4), is effected, wherein the absolute angular position is displayed on the display device (4).

2. Mobile receiver unit (1) according to Claim 1, **characterized in that** the relative angle change of the mobile receiver unit (1) about a panning axis (A) is captured as the axis from an initial state into a panned state, wherein the control command for the relative angle change of the panning angle (α) of the camera (3) is determined by way of the relative angle change of the mobile receiver unit (1) about the panning axis (A).

3. Mobile receiver unit (1) according to Claim 2, **characterized in that** the gyro sensor system (7) comprises at least one first and one second gyro sensor, wherein the first gyro sensor is assigned to the panning axis (A) and the second gyro sensor is assigned to the tilt axis (B).

4. Mobile receiver unit (1) according to Claim 2, **characterized in that** the absolute value of the relative angle change of the panning angle (α) of the camera (3) is equivalent to the absolute value of the relative angle change of the mobile receiver unit (1) about the at least one axis (A, B).

5. Mobile receiver unit (1) according to one of the preceding claims, **characterized in that** the mobile receiver unit (1) comprises an operating device, wherein a zoom of the image is controllable using the operating device.

6. Mobile receiver unit (1) according to one of the preceding claims, **characterized in that** the mobile receiver unit (1) is embodied as a tablet or as a mobile phone.

7. Method for operating a mobile receiver unit (1), preferably according to one of the preceding claims,
wherein in the case of a relative angle change of the mobile receiver unit (1) about the at least one axis (A, B) the panning angle (α) is changed,
and wherein in the case of a change in the absolute angular position of the mobile receiver unit (1) the absolute angle setting of the panning angle (α) of the camera (3) is changed,
wherein, for setting the panning angle (α) of the camera (3), the absolute angle setting of the panning angle of the camera (3) is effected in a first step by capturing the absolute angular position of the mobile receiver unit (1) using the compass sensor system (8) and, in a second and each further step, the relative angle change of the panning angle (α) of the camera (3) is effected, wherein the relative angle change of the mobile receiver unit (1) about the panning axis (A) is captured using the gyro sensor system (7), wherein the absolute value of the absolute angle setting of the panning angle (α) of the camera (3) is equivalent to the absolute value of the absolute angular position of the mobile receiver unit (1),
wherein panning of the mobile receiver unit (1) about the rotational axis thereof, which is formed by a normal of a screen surface of the display device (4), is effected, wherein the absolute angular position is displayed on the display device (4).

8. Computer program having program code means for performing all steps of the method according to Claim 7, when the program is executed on a computer and the mobile receiver unit (1) of any one of Claims 1 to 6.

## Revendications

1. Récepteur mobile (1) permettant de commander un système d'actionneur (2) pour régler un angle de pivotement (α) d'une caméra (3),
comportant un dispositif d'affichage (4) pour afficher une image détectée par la caméra (3),
un dispositif de commande (5) pour définir des instructions de commande pour le système d'actionneur (2),
un émetteur (6) pour transmettre les instructions de commande au système d'actionneur (2),
dans lequel
le dispositif de commande (5) comporte un système de capteurs gyroscopiques (7) pour détecter une modification angulaire relative du récepteur mobile (1) autour d'au moins un axe (A, B), dans lequel une instruction de commande pour une modification angulaire relative de l'angle de pivotement (α) de la caméra (3) est déterminée par la modification angulaire relative, et
le dispositif de commande (5) comporte un système de capteurs compas (8) pour détecter une position angulaire absolue du récepteur mobile (1) autour d'au moins un axe (A, B), dans lequel une instruction de commande de réglage de l'angle de pivotement (α) de la caméra est déterminée à partir de la position angulaire absolue,
**caractérisé en ce que**,
le récepteur mobile (1) est conçu de telle manière que, pour régler l'angle de pivotement (α) de la caméra (3), lors d'une première étape, le réglage angulaire absolu de l'angle de pivotement (α) de la caméra (3) soit effectué en détectant la position angulaire absolue du récepteur mobile (1) au moyen du système de capteurs compas (8) et **en ce que**, lors d'une seconde étape et de chaque autre étape, la modification angulaire relative de l'angle de pivotement (α) de la caméra (3) soit effectuée, dans lequel la modification angulaire relative du récepteur mobile (1) autour de l'axe de pivotement (A) est détectée au moyen du système de capteurs gyroscopiques (7), dans lequel la valeur du réglage angulaire absolu de l'angle de pivotement (α) de la caméra (3) est équivalente à la valeur de la position angulaire absolue du récepteur mobile (1), dans lequel un pivotement du récepteur mobile (1) autour de son axe de rotation formé par une normale à une surface d'écran du dispositif d'affichage (4) est effectué, dans lequel la position angulaire absolue est affichée sur le dispositif d'affichage (4).

2. Récepteur mobile (1) selon la revendication 1, **caractérisé en ce que** la modification angulaire relative du récepteur mobile (1) autour d'un axe de pivotement (A) est détectée en tant qu'axe d'un état original à un état de pivotement, dans lequel l'instruction de commande pour la modification angulaire relative de l'angle de pivotement (α) de la caméra (3) est déterminée par la modification angulaire relative du récepteur mobile (1) autour de l'axe du pivotement (A).

3. Récepteur mobile (1) selon la revendication 2, **caractérisé en ce que** le système de capteurs gyroscopiques (7) comprend au moins un premier et un second capteur gyroscopique,
dans lequel le premier capteur gyroscopique est associé à l'axe de pivotement (A) et le second capteur gyroscopique est associé à l'axe d'inclinaison (B).

4. Récepteur mobile (1) selon la revendication 2, **caractérisé en ce que** la valeur de la modification angulaire relative de l'angle de pivotement (α) de la caméra (3) est équivalente à la valeur de la modification angulaire relative du récepteur mobile (1) autour dudit au moins un axe (A, B).

5. Récepteur mobile (1) selon l'une des revendications précédentes, **caractérisé en ce que** le récepteur mobile (1) comprend un dispositif de commande, dans lequel un zoom de l'image peut être commandé au moyen du dispositif de commande.

6. Récepteur mobile (1) selon l'une des revendications précédentes, **caractérisé en ce que** le récepteur mobile (1) est réalisé sous la forme d'une tablette ou d'un téléphone mobile.

7. Procédé pour faire fonctionner un récepteur mobile (1), de préférence selon l'une des revendications précédentes,
dans lequel l'angle de pivotement (α) est modifié lors d'une modification angulaire relative du récepteur mobile (1) autour dudit au moins un axe (A, B), et
dans lequel, lors d'une modification de la position angulaire absolue du récepteur mobile (1), le réglage angulaire absolu de l'angle de pivotement (α) de la caméra (3) est modifié,
dans lequel, pour régler l'angle de pivotement (α) de la caméra (3), lors d'une première étape, le réglage angulaire absolu de la caméra (3) est effectué en détectant la position angulaire absolue du récepteur mobile (1) au moyen du système de capteurs compas (8), et lors d'une seconde étape et de chaque autre étape, la modification angulaire relative de l'angle de pivotement (α) de la caméra (3) est effectué, dans lequel la modification angulaire relative du récepteur mobile (1) autour de l'axe de pivotement (A) est détectée au moyen du système de capteurs gyroscopiques (7), dans lequel la valeur du réglage angulaire absolu de l'angle de pivotement (α) de la caméra (3) est équivalente à la valeur de la position angulaire absolue du récepteur mobile (1), dans lequel un pivotement du récepteur mobile (1) autour de son axe de rotation formé par une normale à une surface d'écran du dispositif d'affichage (4) est effectué, dans lequel la position angulaire absolue est affichée sur le dispositif d'affichage (4).

8. Programme d'ordinateur comportant un moyen à code de programme permettant de mettre en oeuvre toutes les étapes du procédé selon la revendication 7 lorsque le programme est exécuté sur un ordinateur et le récepteur mobile (1) selon l'une quelconque des revendications 1 à 6.
